(19) Europäisches Patentamt
European Patent Office
Office européen des brevets

(11) Numéro de publication : **0 387 115 B1**

(12) # FASCICULE DE BREVET EUROPEEN

(45) Date de publication du fascicule du brevet : **29.07.92 Bulletin 92/31**

(51) Int. Cl.$^5$ : **G01D 5/26**

(21) Numéro de dépôt : **90400407.4**

(22) Date de dépôt : **14.02.90**

(54) **Procédé et dispositif de détection et de mesure d'une grandeur physique.**

(30) Priorité : **14.02.89 FR 8901900**

(43) Date de publication de la demande : **12.09.90 Bulletin 90/37**

(45) Mention de la délivrance du brevet : **29.07.92 Bulletin 92/31**

(84) Etats contractants désignés : **AT BE CH DE DK ES FR GB GR IT LI LU NL SE**

(56) Documents cités :
**EP-A- 0 251 632**
**DE-A- 3 044 183**
**DE-A- 3 623 265**
**GB-A- 2 144 534**

(73) Titulaire : **BERTIN & CIE**
**Zone Industrielle Boîte postale 3**
**F-78373 Plaisir Cédex (FR)**

(72) Inventeur : **Lequime, Michel, René**
**6, rue des Sauries**
**F-13510 Eguilles (FR)**

(74) Mandataire : **Ramey, Daniel et al**
**Cabinet Ores 6 Avenue de Messine**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 387 115 B1

Jouve, 18, rue Saint-Denis, 75001 PARIS

## Description

L'invention concerne un procédé et un dispositif de détection et de mesure d'une grandeur physique, au moyen de capteurs qui comprennent chacun un élément sensible à la grandeur à mesurer, et dont la transmission spectrale varie en fonction de cette grandeur, ces capteurs étant éclairés par un faisceau de lumière incohérente et transmettant des signaux lumineux à des moyens d'analyse spectrale, au moyen desquels on détermine la valeur de la grandeur physique.

On connaît déjà, par exemple par les demandes internationales WO 87/05691 et WO 87/05692 de la demanderesse, des procédés et dispositifs de ce genre, dans lesquels les capteurs utilisés sont du type interférométrique et réalisent une modulation périodique du spectre de la lumière qu'ils transmettent, à une fréquence de modulation caractéristique qui varie en fonction de la grandeur physique à mesurer. Les moyens d'analyse sont également du type interférométrique et permettent de réaliser, par transformation de Fourier, une démodulation des flux lumineux issus des capteurs. Cette transformation de Fourier par voie optique du flux lumineux modulé par le capteur permet de détecter la fréquence caractéristique de modulation dans le capteur, et donc la valeur de la grandeur physique à mesurer.

La présente invention a pour objet un procédé et un dispositif du même type, mais faisant appel à des moyens différents d'analyse des flux lumineux issus des capteurs.

Elle a également pour objet un procédé et un dispositif de ce type, permettant de réaliser le multiplexage et le démultiplexage des signaux émis par différents capteurs soumis à une grandeur physique à mesurer.

Elle propose, à cet effet, un procédé de détection et de mesure d'une grandeur physique, consistant à éclairer un capteur de type interférométrique sensible à la grandeur à mesurer par une source de lumière incohérente, à moduler de façon périodique le spectre du flux lumineux dans le capteur à une fréquence qui est fonction de la grandeur à mesurer, puis à démoduler de façon statique le flux lumineux sortant du capteur, au moyen d'un interféromètre démodulateur, et à analyser le spectre du flux lumineux démodulé pour en déduire la valeur de la grandeur physique, caractérisé en ce qu'il consiste à utiliser un appareil d'analyse spectrale du flux démodulé qui a une résolution optique telle qu'il est insensible aux fréquences de modulation générées par le capteur et par le démodulateur, et à analyser dans le signal démodulé uniquement une modulation caractéristique d'une fréquence de battement entre la modulation spectrale due au capteur et celle due au démodulateur.

Le procédé selon l'invention permet donc, par utilisation d'un appareil d'analyse spectrale ayant une résolution peu poussée, d'obtenir la valeur de la grandeur physique à mesurer, non pas par analyse d'une modulation caractéristique dans le capteur, mais par composition de cette modulation caractéristique et d'une fréquence fixe de démodulation.

Selon les cas, ce procédé consiste à mesurer la période et la phase de cette modulation caractéristique de battement dans le signal démodulé, lorsque la fréquence de battement est relativement grande et supérieure à l'inverse de la largeur spectrale de la source lumineuse, ou bien il consiste à mesurer la couleur apparente du flux lumineux démodulé, lorsque cette fréquence de battement est relativement faible et inférieure à l'inverse de la largeur spectrale de la source lumineuse.

On peut donc ainsi, par des moyens classiques de mesure de phase et de période, ou au moyen d'un spectrocolorimètre tel que celui décrit dans le brevet français 2 588 656 de la demanderesse, obtenir la valeur de la grandeur physique à mesurer.

Avantageusement, ce procédé consiste également à mesurer, au préalable, l'intensité du flux lumineux non modulé à la sortie du démodulateur, en réglant le démodulateur ou le capteur pour que l'appareil d'analyse devienne insensible à la fréquence de battement précitée, puis, le capteur étant soumis à la grandeur physique à mesurer, à multiplier le flux lumineux démodulé par l'inverse du flux non modulé, pour obtenir un signal à analyser indépendant en particulier des transmissions spectrales de l'ensemble des moyens utilisés.

Le procédé consiste également à éliminer le bruit haute fréquence présent dans le signal à analyser, par exemple au moyen d'un lissage de Fourier.

De préférence, ces opérations sont réalisées par calcul sur un système de traitement de l'information.

Enfin, le procédé selon l'invention consiste également à relier la source de lumière et le démodulateur à une pluralité de capteurs montés en parallèle et ayant des fréquences caractéristiques de modulation différentes, et à accorder le démodulateur successivement sur chacun des capteurs.

On réalise ainsi, de façon simple, un multiplexage et un démultiplexage des signaux issus d'une pluralité de capteurs soumis à la grandeur physique à mesurer.

L'invention propose également un dispositif de détection et de mesure d'une grandeur physique, en particulier par exécution de ce procédé, le dispositif comprenant une source de lumière incohérente, un capteur du type interférométrique, sensible à la grandeur à mesurer et réalisant une modulation périodique du spectre du flux lumineux émis par la source, à une fréquence fonction de la grandeur à mesurer, des moyens de démodulation statique du flux lumineux transmis par le capteur, tels qu'un interféromètre démodulateur, des moyens d'analyse spectrale du flux lumineux démodulé, et des fibres optiques de liaison entre la source, le capteur, les moyens de démodulation et les moyens d'analyse spectrale, le dispositif étant caractérisé en ce que les moyens d'analyse spectrale ont une résolution optique telle qu'ils sont insensibles aux fréquences de modulation générées par le capteur et par les moyens de démodulation, et sensibles à la différence de ces fréquences.

Selon les cas, les moyens d'analyse spectrale comprennent des moyens de calcul de la période et de la phase de la modulation caractéristique, dans le signal analysé, de la fréquence de battement entre la modulation due au capteur et celle due aux moyens de démodulation, ou bien des moyens de mesure de la couleur apparente du flux lumineux démodulé.

Des moyens de suppression du bruit haute fréquence dans le flux démodulé sont prévus, tels que des moyens de calcul effectuant un lissage de Fourier sur ce flux.

Le dispositif peut comprendre plusieurs capteurs connectés en parallèle entre la source de lumière et les moyens de démodulation, ces capteurs ayant des fréquences caractéristiques de modulation différentes, les moyens de démodulation étant susceptibles d'être accordés successivement sur chaque capteur.

L'invention sera mieux comprise et d'autres détails, caractéristiques et avantages de celle-ci apparaîtront plus clairement à la lecture de la description qui suit, faite à titre d'exemple en référence aux dessins annexés dans lesquels :

la figure 1 représente schématiquement un dispositif selon l'invention ;

le figure 2 représente schématiquement une réalisation avantageuse des moyens de démodulation;

la figure 3 représente schématiquement un autre dispositif selon l'invention, permettant le multiplexage et le démultiplexage de capteurs montés en parallèle.

On se réfère d'abord à la figure 1, dans laquelle la référence 10 désigne une source de lumière incohérente.

Cette source de lumière 10 est reliée par une fibre optique 12 à un capteur 14 par exemple de type interférométrique, qui est sensible à la grandeur physique à mesurer. Cette grandeur physique peut être par exemple la température, un déplacement, un champ électrique, etc...

Le capteur 14 réalise une modulation périodique du spectre du flux lumineux émis par la source 10 à une fréquence caractéristique qui varie en fonction de la grandeur physique à mesurer. Le capteur 14 est luimême relié par une fibre optique 16 à un système démodulateur 18, tel qu'un interféromètre de démodulation statique, produisant un signal lumineux qui est transmis par une fibre optique 20 à des moyens 22 d'analyse spectrale.

Comme indiqué plus haut, ces moyens 22 d'analyse spectrale peuvent être, par exemple, un spectrocolorimètre à fibres optiques, du type décrit dans le brevet français 2 588 656 de la demanderesse. Le flux lumineux transmis par le capteur 14 est donné par la formule suivante :

$$B'(\sigma) = \frac{1}{2} B(\sigma)\, T_1(\sigma)\, [1 + \cos 2\pi\sigma\Delta(x)]$$

où : $B'(\sigma)$ est le flux émergeant du capteur 14,
X est la grandeur à mesurer
$\Delta(X)$ est la différence de marche variable dans le capteur 14,
$\sigma$ est le nombre d'onde,
$B(\sigma)$ est le flux lumineux émis par la source 10,
$T_1(\sigma)$ est la transmission spectrale de l'ensemble fibre optique 12 - capteur 14.

De manière similaire, le flux lumineux sortant de l'interféromètre démodulateur 18 s'écrit :

$$B''(\sigma) = \frac{1}{2} B'(\sigma)\, T_2(\sigma)\, [1 + \cos 2\pi\sigma\Delta_0]$$

où : $B''(\sigma)$ est le flux émergeant du démodulateur 18,
$\Delta_o$ est la différence de marche fixe dans le démodulateur 18,
$T_2(\sigma)$ est la transmission spectrale de l'ensemble fibre optique 16 - démodulateur 18.

Cette formule s'écrit encore :

$$B''(\sigma) = \frac{1}{4} B(\sigma)\, T(\sigma)\, [1 + \cos 2\pi\sigma\Delta(x) + \cos 2\pi\sigma\Delta_0 + \frac{1}{2}\cos 2\pi\sigma(\Delta_0 - \Delta(x)) + \frac{1}{2}\cos 2\pi\sigma(\Delta_0 + \Delta(x))]$$

avec : $T(\sigma) = T_1(\sigma)\, T_2(\sigma)$

L'appareil 22 d'analyse spectrale est conçu de telle sorte que sa résolution optique n'est pas suffisamment poussée pour qu'il soit sensible aux fréquences de modulation générées par le capteur 14 et le démodulateur 18, ce qui correspond aux conditions suivantes:

$$\delta\sigma \,.\, \Delta(x) \gg 1$$

$$\delta\sigma \,.\, \Delta \gg 1$$

où $\delta\sigma$ est la résolution optique de l'appareil 22 d'analyse spectrale.

Le spectre enregistré par l'appareil 22 d'analyse spectrale s'écrit alors de la façon suivante :

$$S(\sigma) = \frac{1}{4} B(\sigma)\, T(\sigma)\, [1 + \cos 2\pi\sigma(\Delta_0 + \Delta(x))]$$

Le spectre visible par l'appareil 22 d'analyse spectrale comprend donc une modulation à une fréquence caractéristique de la différence des différences de marche optiques dans le capteur 14 et dans le démodulateur 18. La différence de marche optique dans le démodulateur 18 étant connue, on en déduit la différence de marche dans le capteur 14, et donc

la valeur de la grandeur physique X à mesurer.

De préférence, on procède à un calibrage préalable du dispositif, de la façon suivante :

On fait en sorte, par une action sur le démodulateur 18, que la fréquence de battement entre la modulation due au capteur 14 et celle due au démodulateur 18 soit telle que l'appareil 22 d'analyse spectrale y soit insensible. On doit donc avoir la condition suivante:

$$\delta\sigma . \mid \Delta_0 - \Delta(x) \mid >> 1$$

ce qui permet d'obtenir la partie non modulée du flux lumineux arrivant sur l'appareil 22 d'analyse spectrale, c'est-à-dire :

$$\frac{1}{4} B(\sigma)\, T(\sigma)$$

Cette mesure étant mise en mémoire, il suffira de multiplier par son inverse le flux lumineux analysé pour obtenir un signal du type :

$$1 + \frac{1}{2} \cos 2\pi\sigma (\Delta_0 - \Delta(x))$$

On peut aussi soustraire $\frac{1}{2}$ à cette expression et mettre $\frac{1}{2}$ en facteur, pour obtenir une expression du type 1 + cos a x, qui est une modulation pure.

Ces opérations de normalisation étant effectuées, on peut ensuite, selon les cas, mesurer la couleur apparente du flux lumineux transmis, par exemple au moyen d'un spectrocolorimètre, ou bien mesurer directement la période et la phase de la modulation périodique de battement dans le signal analysé.

De préférence, la mesure de la couleur apparente du flux lumineux est réalisée lorsque la fréquence de battement est faible et inférieure à l'inverse de la largeur spectrale de la source lumineuse, c'est-à-dire lorsque:

$$\Delta_0 - \Delta(x) < (\Delta\sigma)^{-1}$$

Inversement, lorsque la fréquence de battement est supérieure à l'inverse de la largeur spectrale de la source lumineuse, on peut mesurer la période et la phase de la modulation correspondante.

Une autre possibilité consiste à supprimer, dans le signal analysé, le bruit haute fréquence, par exemple par un lissage de Fourier, les hautes fréquences n'ayant pas de rapport avec le phénomène étudié, et la valeur maximale de la fréquence de battement étant a priori prévisible. On modélise ensuite le signal sous la forme 1 + acosb et on détermine la fréquence de battement par ajustement (par exemple par une méthode des moindres carrés).

Toutes ces opérations de normalisation, de mesure et de calcul de la fréquence de battement sont réalisées par calcul sur des moyens de traitement de l'information.

Il est avantageux de choisir la différence de marche optique dans l'interféromètre de démodulation 18 de telle sorte qu'elle soit toujours inférieure à la différence de marche optique dans le capteur 14, quelle que soit la valeur de la grandeur physique à l'intérieur du domaine de mesure. On évite ainsi une ambiguïté due à la parité de la fonction cosinus.

On a représenté schématiquement en figure 2 un mode de réalisation avantageux de l'interféromètre de démodulation 18. Celui-ci est du type biréfringent et comprend une optique de collimation $0_1$ , au foyer de laquelle se trouve l'extrémité de la fibre optique 16; un polariseur P; un premier cristal biréfringent $C_1$ d'épaisseur $e_1$ et de biréfringence $\Delta n_1$ , dont les axes neutres sont orientés à 45° de la direction passante du polariseur; un second cristal biréfringent $C_2$ , d'épaisseur $e_1$ et de biréfringence $\Delta n_2$ , dont les axes neutres sont orientés à 45° de la direction passante du polariseur P; un analyseur A, en position croisée ou parallèle par rapport au polariseur P; et une optique $0_2$ de focalisation du faisceau lumineux dans la fibre optique 20.

Les deux cristaux $C_1$ et $C_2$ sont orientables l'un par rapport à l'autre pour générer les deux différences de marche suivantes :

$$\Delta_1 = e_2 \Delta n_2 - e_1 \Delta n_1$$

(quand l'axe lent du cristal $C_1$ coincide avec l'axe rapide du cristal $C_2$)

$$\Delta_2 = e_2 \Delta n_2 + e_1 \Delta n_1$$

(quand les axes lents des cristaux $C_1$ et $C_2$ coincident)

La rotation d'un des cristaux sur 90° permet de passer d'une différence de marche à l'autre, sans insertion supplémentaire d'un élément optique sur le trajet de la lumière.

Le choix convenable des cristaux $C_1$ et $C_2$ permet de procéder de façon simple au calibrage précité du dispositif, puis à la mesure proprement dite, au moyen du même démodulateur comprenant les mêmes composants optiques, la différence de marche $\Delta_2$ étant par exemple utilisée pour la calibration, et $\Delta_1$ pour la mesure.

L'invention permet par ailleurs, comme représenté en figure 3, de multiplexer et de démultiplexer les informations provenant de différents capteurs, dans la mesure où les fréquences caractéristiques de modulation générées par ces capteurs sont suffisamment différentes entre elles.

Le dispositif de la figure 3 comprend donc une source de lumière incohérente 10, reliée par une fibre optique 12 à un coupleur en étoile 24, lui-même relié par des fibres optiques 26 à des capteurs $14_1,...,14_i,...14_n$ montés en parallèle. Ces capteurs sont reliés par des fibres optiques 28 et un coupleur en étoile 30 à une fibre optique 16 menant aux moyens 18 de démodulation statique, eux-mêmes reliés aux moyens 22 d'analyse spectrale.

L'interféromètre de démodulation 18 est conçu de telle sorte qu'il puisse être accordé à chaque capteur $14_1,..., 14_i, 14_n$, c'est-à-dire que sa différence de marche optique peut prendre des valeurs accordées

aux différences de marche optique dans les différents capteurs. On peut alors remonter de façon séquentielle aux valeurs de la ou des grandeurs physiques mesurées par les capteurs.

Pour fixer les idées, on précisera à titre d'exemple que le ou les capteurs 14 peuvent être du type de ceux décrits dans les demandes internationales PCT précitées de la demanderesse, et que l'interféromètre de démodulation 18 peut être un interféromètre de Michelson ou un interféromètre biréfringent, tel que décrit par exemple en référence à la figure 2.

**Revendications**

1. Procédé de détection et de mesure d'une grandeur physique, consistant à éclairer un capteur (14) de type interférométrique sensible à la grandeur à mesurer par une source (10) de lumière incohérente, à moduler de façon périodique le spectre du flux lumineux passant dans le capteur (14) à une fréquence qui est fonction de la grandeur à mesurer, puis à démoduler de façon statique le flux lumineux sortant du capteur (14), au moyen d'un interféromètre démodulateur (18), et à analyser le spectre du flux lumineux démodulé pour en déduire la valeur de la grandeur physique, caractérisé en ce qu'il consiste à utiliser un appareil (22) d'analyse spectrale du flux démodulé qui a une résolution optique telle qu'il est insensible aux fréquences de modulation générées par le capteur (14) et par le démodulateur (18), et à analyser dans le signal démodulé uniquement une modulation caractéristique d'une fréquence de battement entre la modulation spectrale due au capteur (14) et celle due au démodulateur (18).

2. Procédé selon la revendication 1, caractérisé en ce que, quand la fréquence de battement est relativement grande et supérieure à l'inverse de la largeur spectrale de la source de lumière (10), il consiste à mesurer la période et la phase de ladite modulation caractéristique dans le signal démodulé.

3. Procédé selon la revendication 1, caractérisé en ce que, quand la fréquence de battement est relativement faible et inférieure à l'inverse de la largeur spectrale de la source de lumière (10), il consiste à mesurer la couleur apparente du flux lumineux démodulé.

4. Procédé selon l'une des revendications précédentes, caractérisé en ce qu'il consiste au préalable à mesurer l'intensité de la partie non modulée du flux à la sortie du démodulateur, en réglant le démodulateur (18) ou le capteur (14) pour que l'appareil d'analyse (22) devienne insensible à la fréquence de battement précitée, puis, le capteur (14) étant soumis à la grandeur physique à mesurer, à multiplier le flux lumineux démodulé par l'inverse de la partie non modulée du flux, pour obtenir un signal à analyser indépendant en particulier des transmissions spectrales de l'ensemble des moyens utilisés.

5. Procédé selon la revendication 1 ou 4, caractérisé en ce qu'il consiste à éliminer le bruit haute fréquence présent dans le signal à analyser, au moyen d'un lissage de Fourier, puis à modéliser le signal et à déterminer par calcul la fréquence de battement.

6. Procédé selon l'une des revendications 1 à 5, caractérisé en ce que les opérations précitées sur le signal à analyser sont réalisées par calcul sur un système de traitement de l'information.

7. Procédé selon l'une des revendications 1 à 6, caractérisé en ce qu'il consiste à relier la source (10) et le démodulateur (18) à une pluralité de capteurs ($14_1$,...,$14_i$, $14_n$) montés en parallèle et ayant des fréquences caractéristiques de modulation différentes, et à accorder le démodulateur (18) successivement sur chacun des capteurs.

8. Dispositif de détection et de mesure d'une grandeur physique, en particulier par exécution du procédé selon l'une des revendications précédentes, comprenant une source (10) de lumière incohérente, un capteur (14) de type interférométrique sensible à la grandeur à mesurer et réalisant une modulation périodique du spectre du flux lumineux émis par la source (10), à une fréquence fonction de la grandeur à mesurer, des moyens (18) de démodulation statique du flux lumineux transmis par le capteur (14), tels qu'un interféromètre démodulateur, des moyens (22) d'analyse spectrale du flux lumineux démodulé, et des fibres optiques (12,16,20) de liaison entre la source (10), le capteur (14), les moyens de démodulation (18) et les moyens (22) d'analyse spectrale, caractérisé en ce que les moyens d'analyse (22) ont une résolution optique telle qu'ils sont insensibles aux fréquences de modulation générées par le capteur (14) et par les moyens de démodulation (18), et sensibles à la différence de ces fréquences.

9. Dispositif selon la revendication 8, caractérisé en ce que les moyens d'analyse (22) comprennent des moyens de calcul de la période et de la phase de la modulation caractéristique, dans le signal analysé, de la fréquence de battement entre la modulation due au capteur (14) et celle due au moyen de démodulation (18).

10. Dispositif selon la revendication 8, caractérisé en ce qu'il comprend des moyens de mesure de la couleur apparente du flux lumineux démodulé.

11. Dispositif selon la revendication 8, caractérisé en ce qu'il comprend des moyens de suppression du bruit haute fréquence dans le flux démodulé, tels que des moyens de calcul effectuant un lissage de Fourier sur ce flux.

12. Dispositif selon l'une des revendications 8 à 11, caractérisé en ce qu'il comprend plusieurs capteurs ($14_1$, ... ,$14_i$, $14_n$) connectés en parallèle entre la source de lumière (10) et les moyens de démodulation (18), ces capteurs ayant des fréquences caractéristiques de modulation différentes, les moyens de

démodulation (18) étant susceptibles d'être accordés successivement sur chaque capteur.

13. Dispositif selon l'une des revendications 8 à 12, caractérisé en ce que les moyens de démodulation (18) comprennent un interféromètre à deux cristaux biréfringents ($C_1$ , $C_2$ ) disposés entre un polariseur (P) et un analyseur (A) dont les directions passantes sont croisées ou parallèles, les axes neutres des cristaux ($C_1$ , $C_2$ ) étant à 45° de la direction passante du polariseur (P), et des moyens pour faire tourner de 90° l'un des cristaux par rapport à l'autre, afin d'accorder l'interféromètre sur une différence de marche optique correspondant soit à une calibration préalable, soit à une mesure.

**Patentansprüche**

1. Verfahren zum Detektieren und Messen einer physikalischen Größe, das folgendes aufweist: Beleuchten eines auf die zu messende Größe interferometrisch empfindlichen Sensors (14) mittels einer Quelle (10) inkohärenten Lichts, periodisches Modulieren des Spektrums des durch den Sensor (14) durchgehenden Lichtflusses mit einer Frequenz, die eine Funktion der zu messenden Größe ist, dem statisches Demodulieren des aus dem Sensor (14) austretenden Lichtflusses mittels eines interferometrischen Demodulators (18) und Analysieren des Spektrums des demodulierten Lichtflusses, um daraus den Wert der physikalischen Größe herzuleiten, dadurch gekennzeichnet, daß es folgendes aufweist: Verwenden eines Gerätes (22) zur spektralen Analyse des demodulierten Flusses, welches eine solche optische Auflösung besitzt, daß es auf von dem Sensor (14) und von dem Demodulator (18) erzeugte Modulationsfrequenzen unempfindlich ist und einzig und allein Analysieren einer charakteristischen Modulation mit einer Interferenzfrequenz zwischen der spektralen Modulation des Sensors (14) und des Demodulators (18) im demodulierten Signal.

2. Verfahren nach Anspruch 1, dadurch gekennzeichnet, daß in dem Messen der Periodendauer und der Phase dieser charakteristischen Modulation in dem demodulierten Signal besteht, falls die Interferenzfrequenz relativ groß ist und über der inversen spektralen Breite der Lichtquelle (10) liegt.

3. Verfahren nach Anspruch 1, dadurch gekennzeichnet, daß es in dem Messen der scheinbaren Farbe des demodulierten Lichtflusses besteht, falls die Interferenzfrequenz relativ gering ist und unter der inversen spektralen Breite der Lichtquelle (10) liegt.

4. Verfahren nach einem der vorgehenden Ansprüche, dadurch gekennzeichnet, daß es vorerst in dem Messen der Intensität des nichtmodulierten Anteils des Flusses am Ausgang des Demodulators besteht im Regeln des Demodulators (18) oder des Sensors (14), damit das Analysegerät (22) unabhängig von der Interferenzfrequenz wirkt und dann, daß der Sensor (14) abhängig von der zu messenden Größe den demodulierten Lichtfluß mit dem Kehrwert des nichtmodulierten Teils des Flusses multipliziert, um zum Analysieren ein im besonderen von den spektralen Durchlässigkeiten der Gruppe der angewendeten Mittel unabhängiges Signal zu erhalten.

5. Verfahren nach Anspruch 1 oder 4, dadurch gekennzeichnet, daß es das im zu analysierenden Signal vorhandene hochfrequente Rauschen mittels einer Fourierglättung entfernt, dann das Signal formt und durch Berechnungen die Interferenzfrequenz bestimmt.

6. Verfahren nach einem der Ansprüche 1 bis 5, dadurch gekennzeichnet, daß diese Operationen am zu analysierenden Signal durch Berechnungen mittels eines Informationsverarbeitungssystem verwirklicht werden.

7. Verfahren nach einem der Ansprüche 1 bis 6, dadurch gekennzeichnet, daß die Quelle (10) und der Demodulator (18) mit einer Mehrzahl von Sensoren ($14_1$..., $14_i$, $14_n$) verbunden werden, die parallel angebracht sind und charakteristische Frequenzen zur unterschiedlichen Modulation besitzen und der Demodulator (18) aufeinanderfolgend auf jeden Sensor abgestimmt wird.

8. Vorrichtung zum Detektieren und Messen einer physikalischen Größe im besonderen durch Anwendung des Verfahrens nach einem der vorigen Ansprüche, die eine Quelle (10) inkohärenten Lichts, einen Sensor (14), der von einer auf die zu messende Größe interferometrisch empfindlichen Art ist und eine periodische Modulation des von der Lichtquelle (10) emittierten Spektrums mit einer Frequenz verwirklicht, die mit der zu messenden physikalischen Größe in Zusammenhang steht, Mittel (18) zur statischen Modulation des durch den Sensor (14) durchgelassenen Lichtflusses, wie einen interferometrischen Demodulator, Mittel (22) zur spektralen Analyse des demodulierten Lichtflusses und optische Fasern (12, 16, 20) zur Verbindung zwischen der Quelle (10), dem Sensor (14), den Demodulationsmitteln (18) und den Mitteln zur spektralen Analyse (22) aufweist, dadurch gekennzeichnet, daß die Analysemittel (22) eine solche optische Auflösung besitzen, daß sie auf die von dem Sensor (14) und dem Demodulationsmittel (18) erzeugten Modulationsfrequenzen unempfindlich und auf die Differenz dieser Frequenzen empfindlich sind.

9. Vorrichtung nach Anspruch 8, dadurch gekennzeichnet, daß die Analysemittel (22) Mittel zum Berechnen der Periodendauer und der Phase der charakteristischen Modulation im analysierten Signal der Interferenzfrequenz zwischen der Modulation durch den Sensor (14) und jener durch das Demodulationsmittel (18) aufweisen.

10. Vorrichtung nach Anspruch 8, dadurch gekennzeichnet, daß sie Mittel zum Messen der auftretenden Farbe des demodulierten Lichtflusses aufweist.

11. Vorrichtung nach Anspruch 8, dadurch gekennzeichnet, daß sie Mittel zum Unterdrücken des hochfrequenten Rauschens im demodulierten Fluß aufweist, solcherart, daß die Berechnungsmittel an diesem Fluß eine Fourierglättung bewirken.

12. Vorrichtung nach einem der Ansprüche 8 bis 11, dadurch gekennzeichnet, daß sie mehrere Sensoren ($14_1$..., $14_i$, $14_n$) aufweist, die parallel zwischen der Lichtquelle (10) und den Modulationsmitteln (18) geschaltet sind, daß diese Sensoren unterschiedliche charakteristische Modulationsfrequenzen haben und daß die Demodulationsmittel (18) aufeinanderfolgend auf jeden Sensor abgestimmt werden können.

13. Vorrichtung nach einem der Ansprüche 8 bis 12, dadurch gekennzeichnet, daß die Demodulationsmittel (18) ein Interferometer mit zwei doppelbrechenden Kristallen ($C_1$, $C_2$) aufweisen, die zwischen einem Polarisator (P) und einem Analysator (A) angeordnet sind, deren Durchgangsrichtungen gekreuzt oder parallel sind, wobei die neutralen Achsen der Kristalle ($C_1$, $C_2$) unter 45° zur Durchgangsrichtung des Polarisators (P) liegen, sowie Mittel zum Drehen eines der Kristalle bezüglich des anderen um 90°, um das Interferometer entweder entsprechend einer vorhergehenden Kalibrierung oder einer Messung auf eine unterschiedliche optische Weglänge abzustimmen.

## Claims

1. A method of detecting and measuring a physical magnitude, the method consisting in using a source (10) of incoherent light to illuminate a sensor (14) of the interferometric type and sensitive to the magnitude to be measured, in modulating in periodic manner the spectrum of the light flux passing through the sensor (14) at a frequency which is a function of the magnitude to be measured, then in statically demodulating the light flux leaving the sensor (14) by means of a demodulator interferometer (18), and in analyzing the demodulated light flux spectrum to deduce the value of the physical magnitude therefrom, the method being characterized in that it consists in using demodulated flux spectrum analysis apparatus (22) having optical resolution such as to be insensitive to modulation frequencies generated by the sensor (14) and by the demodulator (18), and in analyzing solely that modulation in the demodulated signal which is characteristic of a beat frequency between the spectrum modulation due to the sensor (14) and that due to the demodulator (18).

2. A method according to claim 1, characterized in that when the beat frequency is relatively large and greater than the reciprocal of the spectrum width of the light source (10), the method consists in measuring the period and the phase of said characteristic modulation in the demodulated signal.

3. A method according to claim 1, characterized in that when the beat frequency is relatively low and less than the reciprocal of the spectrum width of the light source (10), the method consists in measuring the apparent color of the demolated light flux.

4. A method according to any preceding claim, characterized in that it consists in measuring the intensity of the non-modulated portion of the flux from the demodulator, by adjusting the demodulator (18) or the sensor (14) so that the spectrum analysis (22) becomes insensitive to the above-mentioned beat frequency, and then, with the sensor (14) subjected to the physical magnitude to be measured, in multiplying the demodulated light flux by the reciprocal of the non-modulated portion of the flux in order to obtain a signal to be analyzed which is independent, in particular, from the spectral transfer function of the set of means used.

5. A method according to claim 1 or 4, characterized in that it consists in eliminating high frequency noise present in the signal to be analyzed by means of Fourier smoothing, then in modelling the signal, and in determining the beat frequency by calculation.

6. A method according to any one of claims 1 to 5, characterized in that the above-mentioned operations on the signal to be analyzed are performed by calculation in a data processing system.

7. A method according to any one of claims 1 to 6, characterized in that it consists in connecting the source (10) and the demodulator (18) to a plurality of sensors ($14_1$, ..., $14_i$, $14_n$) disposed in parallel and having different characteristic modulation frequencies, and in tuning the demodulator (18) successively to each of the sensors.

8. Apparatus for detecting and measuring a physical magnitude, in particular by performing the method according to any preceding claim, the apparatus comprising a source (10) of incoherent light, an interferometric sensor (14) sensitive to the magnitude to be measured and performing periodic spectrum modulation on the light flux emitted by the source (10), said modulation being at a frequency which is a function of the magnitude to be measured, static demodulation means (18) for demodulating the light flux transmitted by the sensor (14), e.g. a demodulator interferometer, means (22) for performing spectrum analysis on the demodulated light flux, and optical fibers (12, 16, 20) for interconnecting the source (10), the sensor (14), the demodulation means (18) and the spectrum analysis means (22), the apparatus being characterized in that the optical resolution of the analysis means (22) is such as to ensure they are insensitive to modulation frequencies generated by the sensor (14) and by the demodulation means (18), and are sensitive to the difference between said frequencies.

9. Apparatus according to claim 8, characterized

in that the analysis means (22) comprise means responsive to the analyzed signal for calculating the period and the phase of the characteristic modulation from the beat frequency between the modulation due to the sensor (14) and the modulation due to the demodulator means (18).

10. Apparatus according to claim 8, characterized in that it includes means for measuring the apparent color of the demodulated light flux.

11. Apparatus according to claim 8, characterized in that it includes means for eliminating high frequency noise in the demodulated flux, e.g. calculation means performing Fourier smoothing on said flux.

12. Apparatus according to any one of claims 8 to 11, characterized in that it includes a plurality of sensors ($14_1$, ..., $14_i$, $14_n$) disposed in parallel between the light source (10) and the demodulator means (18), said sensors having different characteristic modulation frequencies, and the demodulator means (18) being suitable for being tuned in succession to each sensor.

13. Apparatus according to any one of claims 8 to 12, characterized in that the demodulation means (18) comprise an interferometer having two birefringent crystals ($C_1$, $C_2$) disposed between a polarizer (P) and an analyzer (A) whose transmission directions are crossed or parallel, with the neutral axes of the crystals ($C_1$, $C_2$) being at 45° to the transmission direction of the polarizer (P), and means for rotating one of the crystals through 90° relative to the other, so as to tune the interferometer on an optical path length difference corresponding either to prior calibration or else to measurement.

FIG.1

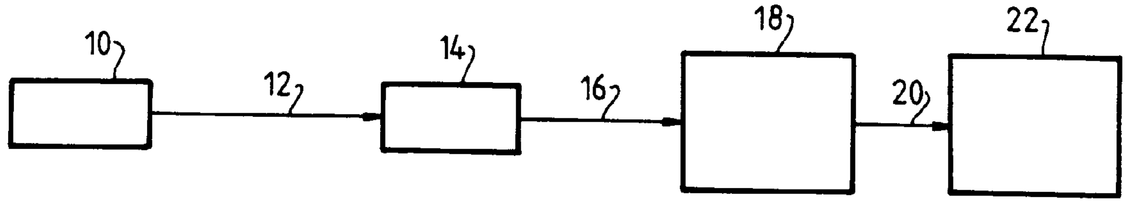


FIG.2

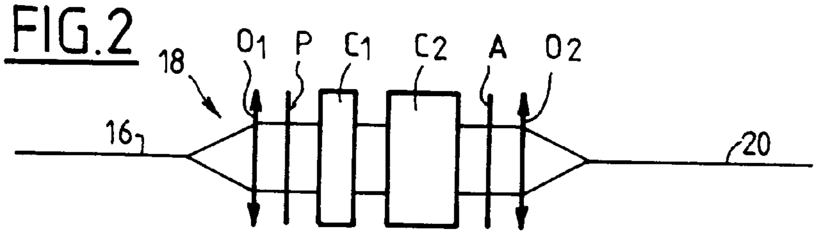


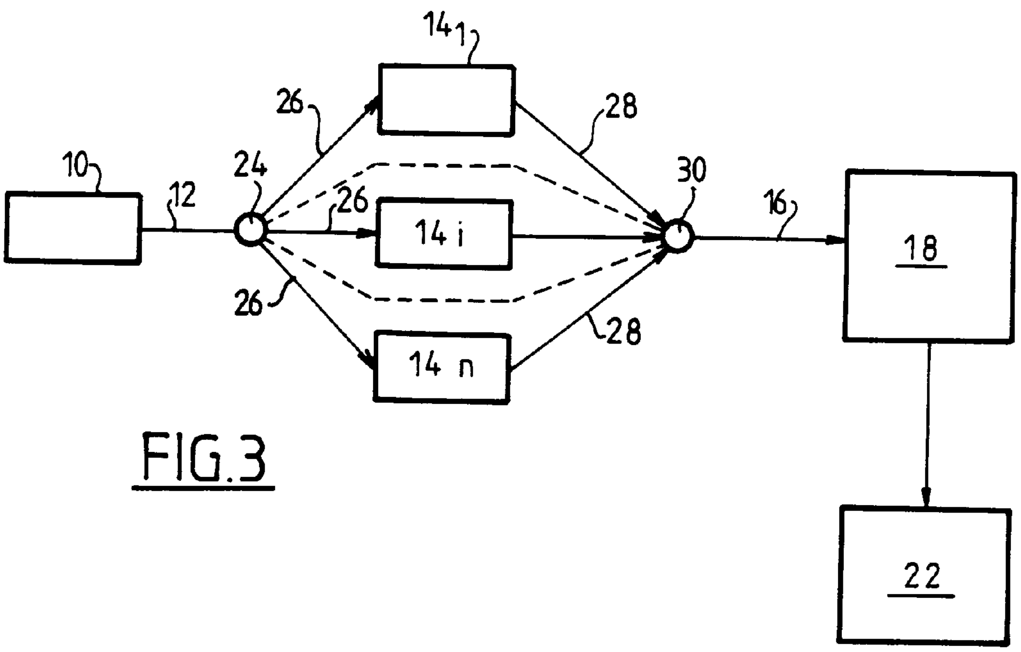


FIG.3